(19) **Europäisches Patentamt / European Patent Office / Office européen des brevets**

(11) **EP 4 418 367 A1**

(12) # EUROPEAN PATENT APPLICATION
published in accordance with Art. 153(4) EPC

(43) Date of publication:
**21.08.2024 Bulletin 2024/34**

(21) Application number: **22881276.4**

(22) Date of filing: **06.10.2022**

(51) International Patent Classification (IPC):
**H01M 4/587** (2010.01)     **H01M 4/36** (2006.01)
**H01M 4/62** (2006.01)     **C01B 32/205** (2017.01)
**H01M 10/0525** (2010.01)

(52) Cooperative Patent Classification (CPC):
**C01B 32/205; H01M 4/36; H01M 4/587;**
**H01M 4/62; H01M 10/0525;** Y02E 60/10

(86) International application number:
**PCT/KR2022/015049**

(87) International publication number:
**WO 2023/063647 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.10.2021 KR 20210134804**

(71) Applicant: Posco Future M Co., Ltd
**Pohang-si, Gyeongsangbuk-do 37918 (KR)**

(72) Inventors:
- **KO, Seung Hyun**
  **Cheonan-si,**
  **Chungcheongnam-do 31182 (KR)**
- **LEE, Heon Young**
  **Cheonan-si,**
  **Chungcheongnam-do 31185 (KR)**
- **CHOI, Hyun Ki**
  **Cheongju-si,**
  **Chungcheongnam-do 28121 (KR)**

- **SONG, Hyeon Jun**
  **Cheonan-si,**
  **Chungcheongnam-do 31112 (KR)**
- **KWON, Ki Min**
  **Cheonan-si,**
  **Chungcheongnam-do 31120 (KR)**
- **JUNG, Myung Sun**
  **Cheonan-si,**
  **Chungcheongnam-do 31187 (KR)**
- **KIM, Ga Eun**
  **Cheonan-si,**
  **Chungcheongnam-do 31120 (KR)**
- **LEE, Jae Hyeon**
  **Cheonan-si,**
  **Chungcheongnam-do 31198 (KR)**

(74) Representative: **Meissner Bolte Partnerschaft
mbB
Patentanwälte Rechtsanwälte
Postfach 86 06 24
81633 München (DE)**

(54) **CARBON MATERIAL FOR NEGATIVE ELECTRODE ACTIVE MATERIAL, NEGATIVE ELECTRODE ACTIVE MATERIAL, RECHARGEABLE LITHIUM BATTERY COMPRISING SAME, AND METHOD FOR MANUFACTURING NEGATIVE ELECTRODE ACTIVE MATERIAL**

(57)     The present invention provides: a negative electrode active material having high discharge capacity, high charge output, and excellent discharge output characteristics; and a carbon material therefor.

A carbon material for a negative electrode active material according to an embodiment of the present invention provides a carbon material having the total fibrosity index (TFI) of 0.58 to 0.78.

FIG. 1

Coke → Pulverization → Grinding → Graphitization → Negative electrode active material

**Description**

**[Technical Field]**

The present disclosure relates to a carbon raw material for a negative electrode active material, a negative electrode active material, a lithium secondary battery including the same, and a method for manufacturing a negative electrode active material.

**[Background Art]**

Recently, battery capacity is increasing due to an increase in power consumption and the like by higher performance and function integration of portable electronic devices such as mobile phones and tablet PCs, and high output power for power tools, in particular, hybrid vehicles (HV) and electric vehicles (EV) is needed, and thus, the need for secondary batteries having excellent charge and discharge speeds and high output characteristics is greatly increasing. In addition, since a charge/discharge cycle of a battery decreases as a use time increases, a battery cycle life is required to be greatly improved, and minimization of changes in battery volume (expansion and shrinkage) of a battery due to deterioration of a battery material is being highlighted as a main required characteristic.

Among secondary batteries, a lithium secondary battery is being widely used due to the merits such as high energy density and high voltage, and among commercially available lithium secondary batteries, a metal oxide-based positive electrode active material and a carbon-based negative electrode active material such as graphite are being employed.

Graphite which is a negative electrode active material is classified into natural graphite which is processed through physical sorting and high purification after mining in the mine and artificial graphite obtained by processing and heat treatment at a high temperature of coke which is a carbon body obtained by heat treating organic matter such as coal or petroleum residues.

A natural graphite-based negative electrode material is favorable for configuration of a high-capacity battery as compared with artificial graphite, but a degree of capacity decrease according to charge/discharge cycle progress is poor. Since natural graphite generally has a scaly (platy) form, it is used generally after being processed into a spheroidized form for increasing filling density and improving output characteristics during manufacture of an electrode. When the natural graphite is processed by spheroidization, milling and the like are generally used, but it is known that a capacity is decreased during the repeated charging and discharging process of a battery due to the increased stress and defects inside graphite particles occurring due to the above process, thereby degrading lifespan characteristics.

Meanwhile, artificial graphite has a somewhat poorer capacity than natural graphite and has a drawback of high price due to its manufacturing process costs, but has a merit of better lifespan characteristics, and thus, is spotlighted as a material for a battery for a portable electronic device of which the long lifespan characteristics are emphasized and is replacing natural graphite at a rapid pace. In general, in order to manufacture an artificial graphite negative electrode material, coal or petroleum-based residues or pitch as a processed product is manufactured by carbonization and a heat treatment at a high temperature (graphitization), and a process of adding a small amount of a material capable of a catalytic graphitization reaction for increasing a capacity to perform a graphitization heat treatment is being applied.

In order to compensate for the drawback of both materials depending on the application purpose, a composite negative electrode material in a mixed form of natural graphite and artificial graphite may also be used. For example, a process of manufacturing a negative electrode material having high capacity, high output, and long lifespan characteristics by a catalyst graphitization heat treatment using a catalyst material added after compositing spheroidized natural graphite and artificial graphite powder has been suggested. In addition, a process of manufacturing a negative electrode material by mixing and compositing coke which is a raw material of artificial graphite and spheroidized natural graphite and performing a final graphitization heat treatment has been suggested. A method of manufacturing a composite negative electrode material by coating each of natural graphite and artificial graphite with a pitch material, carbonizing them to form a carbonaceous layer on the surface, adding a catalyst and mixing, and then performing a final graphitization heat treatment has been suggested.

In general, for the higher capacity of an artificial graphite material, a graphitization heat treatment temperature is maintained high to increase a graphitization degree, or a catalyst material is added for inducing a catalyst graphitization reaction and a heat treatment is performed. In order to improve charge and discharge efficiency, a method of minimizing exposure of a graphite edge portion on a particle surface by surface coating, particle grinding of artificial graphite, or the like to suppress excessive formation of a passivated film produced by decomposition of an electrolyte solution and the like is also used. In order to improve high speed charge and discharge performance, in the case of artificial graphite, mutual orientation of graphite particles in a processed product may be adjusted to be irregular or a carbonaceous coating may be introduced to the surface of particles. In order to decrease changes in artificial graphite material and electrode volume depending on charge and discharge, an artificial graphite processed product may be manufactured so that the mutual orientation of graphite particles therein is irregular or a method of increasing strength of the material itself to improve dimensional stability during the charge and discharge reaction may be used.

In addition to the mentioned cases, various technologies for improving performance of a battery material of artificial graphite are being developed, but generally, there is a trade-off relationship between performances and when a specific performance is improved, other performances are decreased. For example, when a catalyst is introduced during a manufacturing process for increasing a capacity to perform a catalyst graphitization heat treatment, porosity in the inside and on the surface of artificial graphite is increased by pores and the like produced during thermal decomposition of the catalyst, and due to a material specific surface area and increased side reactivity with an electrolyte solution therefrom, a side reaction in which deterioration of battery life characteristics progresses occurs. When the size of artificial graphite particles is decreased to shorten a diffusion distance of lithium ions, high speed charge and discharge characteristics may be improved, but battery life is also decreased due to an increased specific surface area derived from a small particle size.

When a negative electrode material in a secondary particle form in which particles having a small particle diameter are agglomerated and composited into a certain size is formed in order to suppress changes in material and electrode volume occurring during charge and discharge, changes in material volume due to charge and discharge are offset due to primary particles having irregular orientation in the secondary particles, and thus, total changes in electrode volume are decreased. However, there may be side effects, for example, the irregular orientation degree of particles are not sufficient depending on the processed form of unit primary particles or secondary particleization process conditions, the specific surface area is increased or a secondary particle shape is not uniform, so that a decrease in expansion rate of material and electrode depending on charge and discharge is not sufficient, and battery life is decreased.

In addition, in order to satisfy a recently increased demand for fast charge and long lifespan of electric vehicles, going further than agglomerating or granulating separate graphite particles to form a negative electrode material in a secondary particle form as described above, a method for manufacturing an artificial graphite negative electrode active material by adjusting particle diameters of the primary particles and secondary particles, adding an additional carbon raw material to the primary particles and the secondary particles, or further processing the primary particles and the secondary particles to form tertiary particles is disclosed in Korean Patent Application Nos. 10-2018-0165645, 10-2018-0116043, 10-2015-0186817, and the like. However, the negative electrode active material as such has problems of lowered productivity and increased production costs due to addition of a granulation process and the like.

**[Disclosure]**

**[Technical Problem]**

The present disclosure attempts to provide a negative electrode active material having a high discharge capacity, a high charge output, and also excellent discharge output characteristics, and a carbon raw material therefor.

The present disclosure also attempts to provide a negative electrode active material having a high graphitization degree, a low orientation degree, and a low distance between faces, and a carbon raw material therefor.

The present disclosure also attempts to provide a method for manufacturing a negative electrode active material capable of providing a high performance artificial graphite negative electrode active material without a granulation process.

**[Technical Solution]**

An exemplary embodiment of the present disclosure provides a carbon raw material for a negative electrode active material including a carbon raw material having a total fibrosity index (TFI) of 0.58 to 0.78.

The carbon raw material may include one or two or more selected from the group consisting of petroleum-based pitch coke, petroleum-based isotropic coke, petroleum-based needle coke, coal-based pitch coke, coal-based isotropic coke, and coal-based needle coke.

The carbon raw material may be a green type or a calcination type.

Another exemplary embodiment of the present disclosure provides a method for manufacturing a negative electrode active material including: a pulverization step of pulverizing the carbon raw material for a negative electrode active material according to an exemplary embodiment of the present disclosure; a grinding step of grinding the pulverized carbon raw material; and a graphitization step of graphitizing the ground carbon raw material to manufacture a graphite material.

The method for manufacturing a negative electrode active material may further include a coating step of coating a surface of graphite material particles with a carbon layer.

Another exemplary embodiment of the present disclosure provides a negative electrode active material manufactured by the method for manufacturing a negative electrode active material of the present disclosure described above.

Still another exemplary embodiment of the present disclosure provides a lithium secondary battery including: a positive electrode; a negative electrode; and an electrolyte wherein the negative electrode includes the negative electrode active material according to another exemplary embodiment of the present disclosure described above.

The negative electrode active material may have a particle diameter (D50) of preferably 5 to 30 $\mu$m.

The negative electrode active material may have a graphitization degree of preferably 89 to 94%.

The negative electrode active material may have an orientation degree of preferably 6.0 or less.

The negative electrode active material may have a d(002) spacing in a range of preferably 3.360 to 3.363 Å.

**[Advantageous Effects]**

By using the carbon raw material according to an exemplary embodiment of the present disclosure, a negative electrode active material having a high discharge capacity, high charge and discharge efficiency, and excellent charge output and discharge output characteristics is provided.

In addition, since a method for manufacturing a negative electrode active material using the carbon raw material according to an exemplary embodiment of the present disclosure may produce a negative electrode active material having excellent performance without a granulation process by selecting a raw material having an appropriate anisotropic optical structure, raw material costs and production costs may be reduced and productivity is excellent.

**[Description of the Drawings]**

FIG. 1 is a schematic flow chart of a method for manufacturing a negative electrode active material according to an exemplary embodiment of the present disclosure.

FIG. 2 is a schematic flow chart of a conventional method for manufacturing a negative electrode active material.

FIG. 3 is a polarizing micrograph of a microstructure of coke used in Example 1 and Comparative Example 1.

FIG. 4 is a polarizing micrograph of a microstructure of coke used in Example 2.

FIG. 5 is a polarizing micrograph of a microstructure of coke used in Example 3.

FIG. 6 is a polarizing micrograph of a microstructure of coke used in Example 4.

FIG. 7 is a polarizing micrograph of a microstructure of coke used in Example 5.

FIG. 8 is a polarizing micrograph of a microstructure of coke used in Example 6.

**[Best Mode for Invention]**

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, regions, integers, steps, operations, elements, and/or components, but is not excluding the presence or addition of other characteristics, regions, integers, steps, operations, elements, and/or components.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

The present disclosure will be described more fully hereinafter with reference to the accompanying drawings, in which exemplary embodiments of the disclosure are shown. As those skilled in the art would realize, the described embodiments may be modified in various different ways, all without departing from the spirit or scope of the present disclosure.

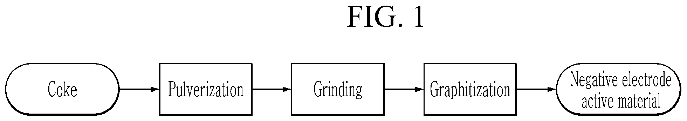

FIG. 1 schematically shows a flow chart of a method for manufacturing a negative electrode active material according to an exemplary embodiment of the present disclosure. However, the flow chart of the method for manufacturing a negative electrode active material of FIG. 1 is only for illustrating the present disclosure, and the present disclosure is not limited thereto. Therefore, the method for manufacturing a negative electrode active material may be variously modified.

As shown in FIG. 1, the method for manufacturing a negative electrode active material according to an exemplary embodiment of the present disclosure includes processes of pulverizing a carbon raw material for a negative electrode active material, grinding the pulverized carbon raw material, graphitizing the ground carbon raw material to manufacture a graphite material. In addition, when the negative electrode active material according to the present disclosure is manufactured, if necessary, a coating step of coating a surface of graphite material particles with a carbon layer may be further performed.

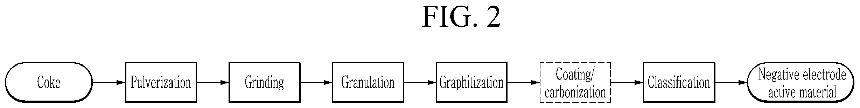

Meanwhile, according to the conventional method for manufacturing a negative electrode active material shown in FIG. 2, in the method for manufacturing a negative electrode active material of the present disclosure shown in FIG. 1, after the grinding step, a process of granulating separate graphite particles having a particle diameter at a several μm level is further performed. The granulation process is a process of manufacturing an artificial graphite negative electrode material having a secondary particle form by intentionally agglomerating or granulating primary particles, and the reason for performing the granulation process as such is for improving the charge output of the negative electrode active material. However, when the granulation process is performed as such, there is a problem of lowered discharge capacity.

While the present inventors studied a method for manufacturing a negative electrode active material, they confirmed that when a carbon raw material having a total fibrosity index (TFI) of 0.58 to 0.78 is selected as a carbon raw material for a negative electrode active material, a negative electrode active material having excellent charge output and excellent discharge capacity may be manufactured.

Further, when the negative electrode active material is manufactured without performing a granulation process according to the present disclosure as such, production cost reduction and productivity improvement may be achieved together.

In the present specification, the total fibrosity index (TFI) is used as an optical structure quantification indicator and is measured as follows (see International Journal of Coal Geology 139 2015 184-190 and ASTM D5061-07):

A coke piece having a width, a length, and a height of about 10 x 10 x 10 mm is fixed to a mold having a specific size, and a process of adding an epoxy resin and a curing agent to harden the piece is performed to prepare a cylindrical specimen having a diameter of 30 mm and a height of 25 mm. Herein, the sizes of the coke piece and the final specimen may be freely changed without being limited to the numerical values. After confirming that the specimen is completely hardened and separating the specimen from the mold, the observation surface of the specimen is smoothly polished. The specimen is observed by a polarizing microscope having a 500x magnification to obtain an image of a structure having a size of a width and a height of 1280 μm x 950 μm.

An area having a continuous same color on the image is defined as one domain and the size and the area of each domain are measured. Using the measured domain size, a structure type is classified by the width (W) and a relationship between the length (L) and the width (W) and a fibrosity index ($W_i$) depending on the type is imparted, as shown in the following Table 1.

(Table 1)

| Structure type | Domain size | | Fibrosity index ($W_i$) |
|---|---|---|---|
| | Width (W, μm) | Length (L) to width (W) relationship | |
| Isotropic | 0.0 | - | 0.00 |
| Incipient | 0.5 | L=W | 0.13 |
| Circular fine | 0.5-1.0 | L = W | 0.19 |
| Circular medium | 1.0-1.5 | L = W | 0.24 |
| Circular coarse | 1.5-2.0 | L < W | 0.43 |
| Lenticular fine | 1.0-3.0 | L ≥2W, L < 4W | 0.61 |
| Lenticular medium | 3.0-8.0 | L > 2W, L < 4W | 0.63 |
| Lenticular coarse | 8.0-12.0 | L > 2W, L ≤4W | 0.64 |
| Ribbon fine | 2.0-12.0 | L > 4W | 0.65 |
| Ribbon medium | 12.0-25.0 | L > 4W | 0.77 |
| Ribbon coarse | 25.0 + | L > 4W | 0.85 |

In the case of the area, an area of the corresponding domain is divided by the total area of the image to obtain a fraction ($X_i$). The area fractions of all domains shown in the image are measured and recorded. The fibrosity index ($W_i$) and the area fraction ($X_i$) of each domain are multiplied according to the following equation and the values of the entire domain are added to determine the total fibrosity index (TFI) value.

$$TFI = \Sigma X_i W_i$$

TFI: total fibrosity index
$W_i$: fibrosity index by domain, minimum=0, maximum=0.85
$X_i$: area fraction by domain, $\Sigma X_i=1$

In addition, a D50 particle diameter in the present specification refers to a particle size when particles in which various particle sizes are distributed are accumulated to a volume ratio of 50%.

The total fibrosity index (TFI) of the carbon raw material for a negative electrode active material according to the present disclosure is preferably 0.58 to 0.78, and when the TFI is too high, charge output is decreased, and when the TFI is too low, discharge output is decreased.

As the carbon raw material, those including one or two or more selected from the group consisting of petroleum-based pitch coke, petroleum-based isotropic coke, petroleum-based needle coke, coal-based pitch coke, coal-based isotropic coke, and coal-based needle coke may be used. In addition, the carbon raw material may be a green type or a calcination type.

Among the carbon raw materials, green coke may be manufactured by a coking reaction of coal or petroleum-based residues or pitch which is a processed product under high pressure and high temperature conditions. Since the green coke as such does not undergo a heat treatment such as calcination or carbonization in a state of being obtained immediately after the coking process, it includes a specific fraction of a volatile content. Further, calcined coke may be manufactured by calcining or carbonizing green coke to remove the volatile content. Anisotropic or needle coke having a high carbonaceous structure orientation degree in a uniaxial direction is obtained or isotropic or pitch coke having a low carbonaceous structure orientation degree is obtained, depending on the composition of a raw material and the coking process conditions.

The D50 particle diameter of the pulverized coke particles is preferably 5 to 30 $\mu$m. When the D50 particle diameter of the coke particles is too large, the particle diameter of the particles of the manufactured negative electrode active material may be excessively increased, and when it is too small, the specific surface area of the manufactured negative electrode active material may be excessively increased or a tap density or electrode density may be decreased.

A pulverizer for pulverizing the carbon raw material is not particularly limited. Specifically, an impact mill, a jet mill, a roller mill, or a common type of continuous or batch pulverizer capable of air classification simultaneously with pulverization may be used.

Since the pulverized coke has a very rough surface, a grinding step is performed for smoothening the surface. Properly ground coke has increased tap density and has excellent processability for an electrode manufacturing process such as slurry formation and current collector coating. A device for the grinding process as such is not particularly limited, and a shaping mill, a spheroidization mill, or a modified pulverizer capable of spheroidized effect improvement and fine particle classification may be used.

Next, ground carbon raw material particles are graphitized to manufacture a graphite material. The process may be performed at a temperature of about 2800 to 3200°C. Equipment which performs this is not particularly limited, and an Acheson furnace may be used. In general, graphitization may be performed in accordance with the operation manner of the Acheseon furnace without using a separate atmosphere gas, but when the atmosphere gas is used, inert gas may be used and the process may be performed in a nitrogen or argon atmosphere. The process may be performed for 10 minutes to 10 hours.

A secondary battery manufactured by an exemplary embodiment of the present disclosure may have a particle diameter (D50) of preferably 5 to 30 $\mu$m. When the particle diameter of the negative electrode active material is less than the above range, the specific surface area may be increased to deteriorate charge and discharge efficiency and lower tap density, thereby causing deterioration of electrode manufacturing processability and energy density decline, and when it is more than the range, electrode resistance is increased, so that high speed charge and discharge may be difficult.

In addition, the graphitization degree of the negative electrode active material is preferably 89 to 94%. Since the graphitization degree is closely related to a discharge capacity, when the graphitization degree of the negative electrode active material is less than the range, the discharge capacity may be excessively lowered, when it is more than the range, internal diffusion resistance is increased, so that high speed charge and discharge may be difficult.

In addition, the orientation degree of the negative electrode active material is preferably 6.0 or less. When the orientation degree of the negative electrode active material is more than the range, charge/discharge output may be greatly lowered.

In another exemplary embodiment of the present disclosure, a lithium secondary battery including a positive electrode; a negative electrode; and an electrolyte wherein the negative electrode includes the negative electrode active material manufactured by the method described above is provided.

The characteristics of the carbon raw material, the negative electrode active material, and the lithium secondary battery therefrom are as described above. The battery configurations other than the negative electrode active material are as commonly known in the art. Therefore, detailed description thereof will be omitted.

**[Mode for Invention]**

Hereinafter, the preferred examples, the comparative example to contrast therewith, and the experimental examples for evaluating them will be described. However, the following examples are only a preferred example, and the present disclosure is not limited to the following examples.

(1) Manufacture of negative electrode active material

Example 1

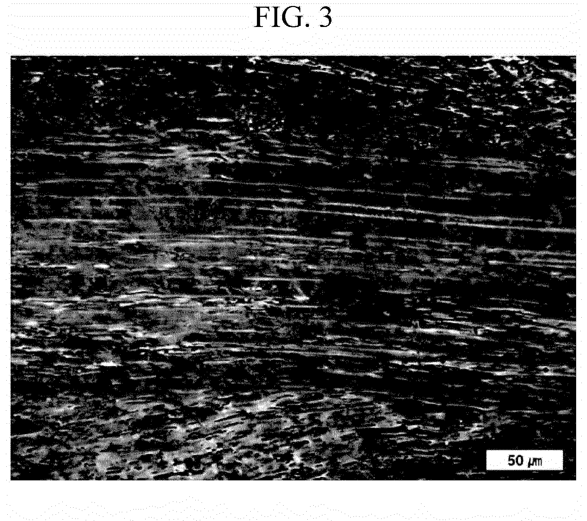

As a carbon raw material, coke having a TFI of 0.84 was used. The photograph of the structure obtained by observing the microstructure of the coke through the polarizing microscope is as shown in FIG. 3. The coke was pulverized and classified using an impact mill so that D50 was 8 $\mu$m. The pulverized coke particles were added to a grinder (shaping mill) and ground for 5 minutes. The ground particles were charged into an Acheson type heat treatment furnace and subjected to a graphitization heat treatment at a temperature of about 3,000°C, and naturally cooled to room temperature to manufacture a negative electrode active material. The particle diameter (D50) of the final artificial graphite negative electrode active material obtained after graphitization was 9.2 $\mu$m, and its graphitization degree was 94.2%.

Example 2

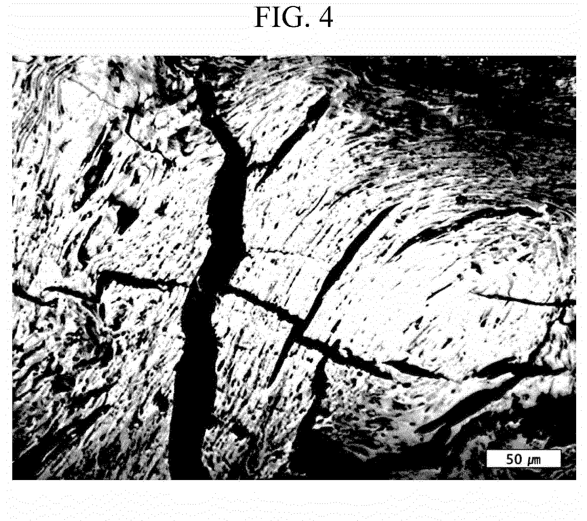

A negative electrode active material was manufactured in the same manner as in Example 1, except that coke having a TFI of 0.70 was used as the carbon raw material. The photograph of the structure obtained by observing the microstructure of the coke through a polarizing microscope is as shown in FIG. 4. The particle diameter (D50) of the final artificial graphite negative electrode active material obtained after graphitization was 9.5 $\mu$m, and its graphitization degree was 91.9%.

Example 3

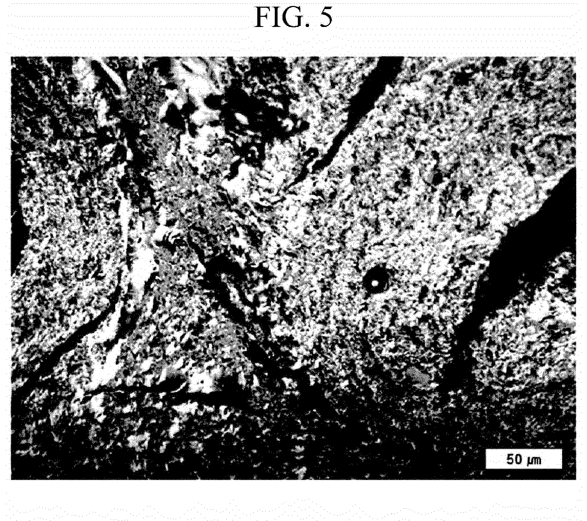

A negative electrode active material was manufactured in the same manner as in Example 1, except that coke having a TFI of 0.39 was used as the carbon raw material. The photograph of the structure obtained by observing the microstructure of the coke through a polarizing microscope is as shown in FIG. 5. The particle diameter (D50) of the final artificial graphite negative electrode active material obtained after graphitization was 11.5 $\mu$m, and its graphitization degree was 88.4%.

Example 4

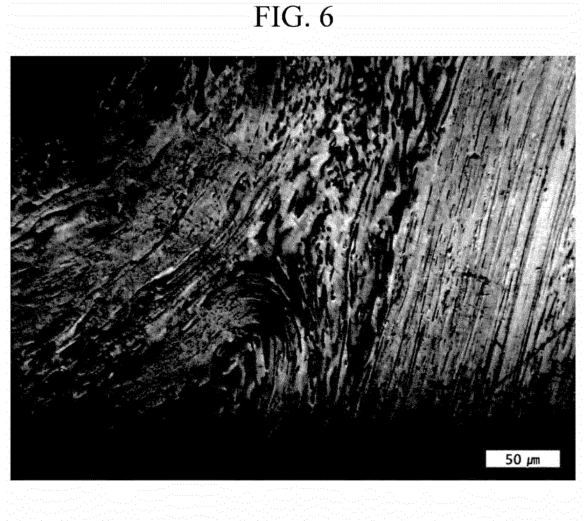

A negative electrode active material was manufactured in the same manner as in Example 1, except that coke having a TFI of 0.74 was used as the carbon raw material. The photograph of the structure obtained by observing the microstructure of the coke through a polarizing microscope is as shown in FIG. 6. The graphitization degree of the final artificial graphite negative electrode active material obtained after graphitization was 91.9%.

Example 5

A negative electrode active material was manufactured in the same manner as in Example 1, except that coke having a TFI of 0.78 was used as the carbon raw material. The graphitization degree of the final artificial graphite negative electrode active material obtained after graphitization was 93.0%.

Example 6

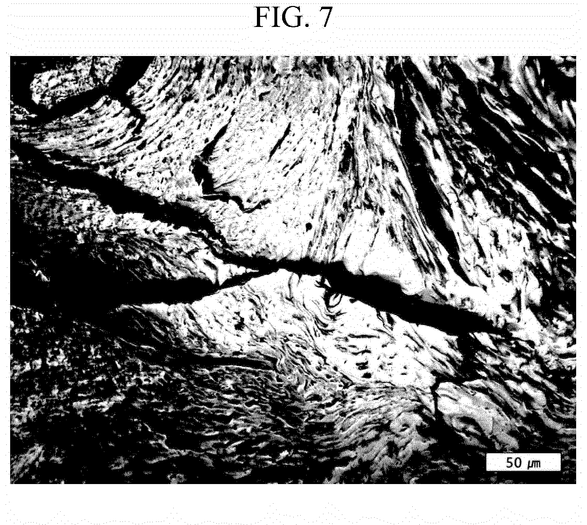

A negative electrode active material was manufactured in the same manner as in Example 1, except that coke having a TFI of 0.64 was used as the carbon raw material. The photograph of the structure obtained by observing the microstructure of the coke through a polarizing microscope is as shown in FIG. 7. The graphitization degree of the final artificial graphite negative electrode active material obtained after graphitization was 90.7%.

Example 7

A negative electrode active material was manufactured in the same manner as in Example 1, except that coke having a TFI of 0.58 was used as the carbon raw material. The graphitization degree of the final artificial graphite negative electrode active material obtained after graphitization was 90.7%.

Example 8

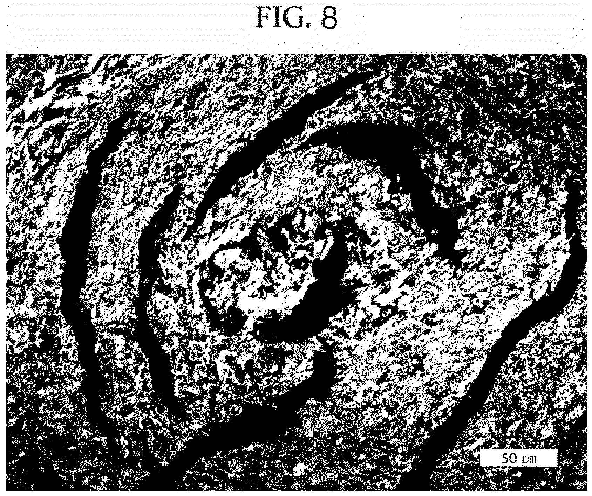

A negative electrode active material was manufactured in the same manner as in Example 1, except that coke having a TFI of 0.45 was used as the carbon raw material. The photograph of the structure obtained by observing the microstructure of the coke through a polarizing microscope is as shown in FIG. 8. The graphitization degree of the final artificial graphite negative electrode active material obtained after graphitization was 86%.

Comparative Example 1

Coke having a TFI of 0.84 was used as a carbon raw material, as in Example 1. The photograph of the structure obtained by observing the microstructure of the coke through a polarizing microscope is as shown in FIG. 3 of Example 1. The coke was pulverized and classified using an impact mill so that D50 was 8 μm. The pulverized coke particles were added to a grinder (shaping mill) and ground for 5 minutes. The ground coke powder and pitch were mixed at a weight ratio of 87:13, charged into granulation equipment, heated to a temperature of 275°C at a heating rate of 2°C/min simultaneously with stirring under a nitrogen atmosphere, and maintained at the temperature for 1 hour. Subsequently, the product was heated to 675°C at a rate of 2.6°C/min for carbonization, maintained at the temperature for 3 hours, and then cooled to room temperature. The granulated/carbonized coke particles were charged into an Acheson type heat treatment furnace and subjected to a graphitization heat treatment at a temperature of 3,000°C, and naturally cooled to room temperature to manufacture a negative electrode active material. The particle diameter of the final artificial graphite negative electrode active material obtained after graphitization was 12.7 μm, and its graphitization degree was 91.9%.

(2) Manufacture of negative electrode

97 wt% of the negative electrode active materials manufactured in the examples and the comparative example, 2 wt% of a binder including carboxymethyl cellulose and styrene butadiene rubber, and 1 wt% of a Super P conductive material were mixed in a distilled water solvent to prepare a negative electrode active material slurry.
The negative electrode active material slurry was applied to a copper (Cu) current collector, dried at 100°C for 10 minutes, and compressed in a roll press. Thereafter, it was vacuum dried in a vacuum oven at 100°C for 12 hours to manufacture a negative electrode.
The electrode density of the negative electrode after vacuum drying was set to 1.5 to 1.7 g/cc.

(3) Manufacture of secondary battery

The negative electrodes manufactured in (2) were used as a negative electrode, a Li-metal was used as a counter electrode, and 1 M LiPF$_6$ solution dissolved in a mixed solvent of ethylene carbonate (EC) and dimethyl carbonate (DMC) at a volume ratio of 1:1 was used as an electrolyte solution.
Each of the constituent elements was used to manufacture a 2032 coin cell type half battery (half coin cell) according to a common manufacturing method.
Experimental Example 1: analysis of physical properties and measurement of charge and discharge characteristics
The graphitization degree, the orientation degree, the interlayer distance d(002), the discharge capacity, and the charge output of the negative electrode active materials manufactured according to Examples 1 to 8 and Comparative Example 1, the negative electrodes manufactured therefrom, and the secondary batteries manufactured using them were measured and are summarized in the following Table 2.

(Table 2)

| | TFI | Graphitiza tion degree (%) | Orientatio n degree | d (002) (Å) | Discharge capacity (mAh/g) | Charge output |
| --- | --- | --- | --- | --- | --- | --- |
| Example1 | 0.84 | 94.2 | 8.4 | 3.359 | 356.5 | 15 |

(continued)

| | TFI | Graphitiza tion degree (%) | Orientatio n degree | d (002) (Å) | Discharge capacity (mAh/g) | Charge output |
|---|---|---|---|---|---|---|
| Examples | 0.70 | 91.9 | 2.5 | 3.361 | 347.7 | 27 |
| Example3 | 0.39 | 87.2 | 1.6 | 3.365 | 324.1 | 29 |
| Example4 | 0.74 | 91.9 | 3.9 | 3.361 | 347.4 | 25 |
| Examples | 0.78 | 93.0 | 6.0 | 3.360 | 352.9 | 22 |
| Examples | 0.64 | 90.7 | 2.7 | 3.362 | 344.2 | 27 |
| Example7 | 0.58 | 90.7 | 2.2 | 3.362 | 340.1 | 27 |
| Example8 | 0.45 | 86.0 | 1.7 | 3.366 | 320.3 | 28 |
| Comparati ve Example1 | 0.84 | 91.9 | 2.4 | 3.361 | 348.6 | 27 |

[Graphitization degree] A higher graphitization degree means higher crystallinity, and it was confirmed that the graphitization degrees of Examples 1, 2, and 4 to 6 and Comparative Example 1 having a higher TFI were higher.

[Orientation degree]

The orientation degree is a value obtained by dividing a (004) peak area on the XRD graph by a (110) peak area and related to the output and lifespan of the negative electrode active material, and a higher orientation degree means poor output and lifespan characteristics. The orientation degree of Example 1 having a high TFI was high, the orientation degree of Comparative Example 1 was low due to the granulation process, and the orientation degrees of Examples 2 to 4 and 6 to 8 were low as in Comparative Example 1 though the granulation was not performed.

[Interlayer distance d(002)]

d(002) is an indicator showing a distance between faces of a graphene layer and a lower d(002) means higher crystallinity and graphitization degree, and it was shown that Example 1 having a high TFI was low and its graphitization degree was as high as 94.2%, and since the interlayer distance value was increased as the TFI was lowered, Examples 3 and 8 having the lowest TIF of 0.39 and 0.45 had very low graphitization degree values of 87.2% and 86.0%.

[Discharge capacity]

The capacity of Example 1 was higher than those of Examples 2 to 8, and this is considered to be due to the fact that a higher TFI increased the graphitization degree to express a high discharge capacity. Comparative Example 1 had the same TFI as, but had a lower capacity than Example 1, and this is considered to be due to the granulation process performed in Comparative Example 1. Example 3 and Example 8 showed very low discharge capacities of 324.1 mAh/g and 320.3 mAh/g, respectively, and this is considered to be due to the fact that a lower TFI (0.6 or less) deteriorated the graphitization degree and when it was applied to the negative electrode material, the capacity was not expressed well.

[Charge output]

Charge output is a value of time when a lithium layer is formed on the surface of a negative electrode during charge of a battery at a high speed current amount of 3 C-rate, shown as a SOC (state of charge) percentage, and a higher value means higher charge output.
When the TIF of the carbon raw material is high, a discharge capacity is high, but charge output is low. However, in Comparative Example 1 and Example 1 having the same TIF, the charge output of Comparative Example 1 was 27 which was higher than the charge output of Example 1 of 15, and this is considered to be due to lowering the orientation degree of the negative electrode active material and increasing the charge output by performing the granulation process. Examples 2 to 8 showed a high level of charge output which was higher than Example 1 and similar to Comparative Example 1 despite the lack of the granulation process, and this is considered to be due to the properly selected TFI level. Example 3 and Example 8 had higher charge output of 29 and 28, but had greatly deteriorated discharge output, and this is considered to be due to a low TIF.

Experimental Example 2: measurement of discharge output characteristic

For the secondary batteries manufactured according to Examples 1 to 8 and Comparative Example 1, while the discharge current amount (C-rate) was changed from a low speed (0.2 C) to a high speed (2.0 C), a capacity retention rate therefrom was measured, and the results at a high speed (2.0 C) are shown in the following Table 3. Charge and discharge were performed 5 times for each C-rate.

(Table 3)

|  | Discharge output(%) |
| --- | --- |
| Example1 | 67.6 |
| Example2 | 84.4 |
| Example3 | 85.9 |
| Example4 | 83.0 |
| Examples | 77.2 |
| Example6 | 89.6 |
| Example7 | 87.1 |
| Examples | 88.8 |
| Comparative Example1 | 86.6 |

In general, as a discharge speed is higher, higher resistance in a battery is taken to decrease a capacity, and as the battery has a smaller reduction rate (higher capacity retention rate) at this time, it has higher discharge output performance. In the results of Table 3, the samples of Examples 2 to 8 and Comparative Example 1 showed high retention rates of about 85% in charge and discharge 5 times at 2.0 C, but the sample of Example 1 showed a lower capacity retention rate than other samples, and also showed a low capacity retention rate at 1.0 C-rate as well as 2.0 C rate and was confirmed to show very poor discharge output characteristics. The TIF of the carbon raw material of Comparative Example 1 was 0.84 which is the same as that of Example 1, but the output characteristics were improved by the granulation process.

However, it is shown that Example 2 to 8 showed high output characteristics at the same level as Comparative Example 1 which was a granulated product though the granulation process was not performed.

The present disclosure is not limited by the exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrates and are not restrictive in all aspects.

**Claims**

1. A carbon raw material for a negative electrode active material, which has a total fibrosity index (TFI) of 0.58 to 0.78.

2. The carbon raw material of claim 1, wherein:
   the carbon raw material includes one or two or more selected from the group consisting of petroleum-based pitch coke, petroleum-based isotropic coke, petroleum-based needle coke, coal-based pitch coke, coal-based isotropic coke, and coal-based needle coke.

3. The carbon raw material of claim 1, wherein:
   the carbon raw material is a green type or a calcination type.

4. A method for manufacturing a negative electrode active material, the method comprising:

a pulverization step of pulverizing the carbon raw material of any one of claims 1 to 3;
a grinding step of grinding the pulverized carbon raw material; and
a graphitization step of graphitizing the ground carbon raw material to manufacture a graphite material.

5. The method for manufacturing a negative electrode active material of claim 4, further comprising:
a coating step of coating a surface of graphite material particles with a carbon layer.

6. The method for manufacturing a negative electrode active material of claim 4 or claim 5, wherein:

the negative electrode active material
satisfies a graphitization degree of 89 to 94%,
has an orientation degree of 6.0 or less, and
has a d(002) spacing in a range of 3.360 to 3.363 Å.

7. The method for manufacturing a negative electrode active material of claim 4 or claim 5, wherein:
the negative electrode active material has a particle diameter (D50) of 5 to 30 $\mu$m.

8. A negative electrode active material which

satisfies a graphitization degree of 89 to 94%,
has an orientation degree of 6 or less, and
has a d(002) spacing in a range of 3.360 to 3.363 Å.

9. The negative electrode active material of claim 8, wherein:
the negative electrode active material has a particle diameter (D50) of 5 to 30 $\mu$m.

10. A lithium secondary battery comprising a positive electrode; a negative electrode; and an electrolyte,
wherein the negative electrode includes the negative electrode active material of claim 8 or 9.

# FIG. 1

Coke → Pulverization → Grinding → Graphitization → Negative electrode active material

# FIG. 2

Coke → Pulverization → Grinding → Granulation → Graphitization → Coating/carbonization → Classification → Negative electrode active material

## FIG. 3

50 μm

FIG. 4

## FIG. 5

## FIG. 6

50 μm

FIG. 7

## FIG. 8

50 μm

<div align="center">

**INTERNATIONAL SEARCH REPORT**

</div>

| | International application No. |
|---|---|
| | **PCT/KR2022/015049** |

**A. CLASSIFICATION OF SUBJECT MATTER**

**H01M 4/587**(2010.01)i; **H01M 4/36**(2006.01)i; **H01M 4/62**(2006.01)i; **C01B 32/205**(2017.01)i; **H01M 10/0525**(2010.01)i

According to International Patent Classification (IPC) or to both national classification and IPC

**B. FIELDS SEARCHED**

Minimum documentation searched (classification system followed by classification symbols)

H01M 4/587(2010.01); G01V 99/00(2009.01); H01M 10/052(2010.01); H01M 10/0525(2010.01); H01M 4/133(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질(anode active material), 탄소(carbon), 총섬유성지수(total fibrosity index), 코크스(cokes), 흑연화(graphitization), 이차전지(secondary battery)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0079995 A (POSCO et al.) 30 June 2021 (2021-06-30)<br> See paragraph [0082]; claims 1, 9 and 12; and table 3. | 8-10 |
| Y | | 1-5 |
| Y | GRAY, R. J. et al. Coke carbon forms: microscopic classification and industrial applications. International Journal of Coal Geology. September 1986, vol. 6, no. 3, pp. 277-297.<br> See page 295; and table 1. | 1-5 |
| Y | KR 10-2018-0125235 A (SK INNOVATION CO., LTD.) 23 November 2018 (2018-11-23)<br> See paragraphs [0074] and [0153]; and table 2. | 5 |
| A | KR 10-2017-0007140 A (LG CHEM, LTD.) 18 January 2017 (2017-01-18)<br> See entire document. | 1-5,8-10 |
| A | EP 2894505 A1 (INSTYTUT CHEMICZNEJ PRZERÓBKI WEGLA) 15 July 2015 (2015-07-15)<br> See entire document. | 1-5,8-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **16 January 2023** | **17 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/015049**

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **6, 7**
because they are dependent claims and are not drafted in accordance with the second and third sentences of Rule 6.4(a).

Form PCT/ISA/210 (continuation of first sheet) (July 2022)

## INTERNATIONAL SEARCH REPORT
### Information on patent family members

International application No.

**PCT/KR2022/015049**

| Patent document cited in search report | | | Publication date (day/month/year) | Patent family member(s) | | | Publication date (day/month/year) |
|---|---|---|---|---|---|---|---|
| KR | 10-2021-0079995 | A | 30 June 2021 | KR | 10-2378529 | B1 | 23 March 2022 |
| KR | 10-2018-0125235 | A | 23 November 2018 | CN | 108878773 | A | 23 November 2018 |
| | | | | KR | 10-2474533 | B1 | 05 December 2022 |
| | | | | US | 10790503 | B2 | 29 September 2020 |
| | | | | US | 2018-0331354 | A1 | 15 November 2018 |
| KR | 10-2017-0007140 | A | 18 January 2017 | KR | 10-2124948 | B1 | 22 June 2020 |
| EP | 2894505 | A1 | 15 July 2015 | EP | 2894505 | B1 | 06 May 2020 |
| | | | | PL | 232619 | B1 | 31 July 2019 |
| | | | | PL | 406798 | A1 | 20 July 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020180165645
- KR 1020180116043
- KR 1020150186817

**Non-patent literature cited in the description**

- *International Journal of Coal Geology,* 2015, vol. 139, 184-190